# EUROPÄISCHE PATENTANMELDUNG

(11) **EP 1 254 791 A2**
(43) Veröffentlichungstag der Anmeldung: **06.11.2002**
(21) Anmeldenummer: 02007694.9
(22) Anmeldetag: 05.04.2002
(51) Int. Cl.: B60G 11/16

(54) **Radaufhängung für Landfahrzeuge**

(30) Priorität: 03.05.2001 DE 10121537
(71) Anmelder: ThyssenKrupp Bilstein GmbH, 58256 Ennepetal (DE)
(72) Erfinder: Sasse, Thomas, Dipl.-Ing., 58256 Ennepetal (DE)

(57) **Zusammenfassung**

Um eine Radaufhängung für Landfahrzeuge mit einer Feder, die sich gegen wenigstens einen Federteller (8) abstützt, einem Schwingungsdämpfer und einer Anlenkung für einen Stabilisatorstab, wobei einer der Federteller (8) in Achsrichtung der Feder einstellbar ausgebildet ist, derartig auszubilden, dass eine Anlenkung für einen Stabilisatorstab im Bereich dieses Federtellers (8) angebracht werden kann, ist am Federteller (8) oder an der Einstellvorrichtung für den Federteller (8) die Anlenkung (10, 20) für den Stabilisatorstab mit einem veränderlich einstellbaren Abstand zum Federteller (8) direkt angebracht oder indirekt angebunden.

## Beschreibung

Die Erfindung betrifft eine Radaufhängung für Landfahrzeuge mit einer Feder, die sich gegen wenigstens einen Federteller abstützt, nach dem Oberbegriff des Anspruchs 1.

Für den Einsatz, vorzugsweise bei PKW, die in kleinen Serien gefertigt werden oder die eine sehr genaue Abstimmung des Feder-Dämpfer-Verhaltens für die Radaufhängungen benötigen, wie beispielsweise Fahrzeuge, die für Rallyes eingesetzt werden, ist es bekannt, dass ein Federteller, gegen den sich die zur Radaufhängung zugehörige Feder abstützt, einstellbar ausgebildet ist. Die Einstellung erfolgt über ein Innengewinde oder über Ringvorsprünge, die in ein entsprechendes Außengewinde oder entsprechende Ringnuten am entsprechenden Abstützteil zusammenwirken. Üblicherweise stützt sich der Federteller am Mantelrohr eines Schwingungsdämpfers oder Federbeins ab. Eine derartige Anbindung eines verstellbaren Federtellers ist aus der DE 44 38 756 A1 bekannt.

Aus der DE 42 01 837 C1 ist es darüber hinaus bekannt, eine Anlenkung für einen Stabilisatorstab direkt an einem fest mit dem Mantelrohr eines Stoßdämpfers verschweißten Federteller anzubinden.

Wenn die Lehre nach der DE 42 01 837 C1 auf einen verstellbaren Federteller gemäß der DE 44 38 756 A1 übertragen würde, würde sich nachteilig die Vorspannung des Stabilisatorstabes mit dem Verstellen des Federtellers verändern, wodurch die Gesamtfahrdynamik sich nicht kontrollierbar verändern würde.

Der Erfindung liegt die Aufgabe zugrunde, eine Radaufhängung für Landfahrzeuge mit einem einstellbaren Federteller nach dem Oberbegriff des Anspruchs 1 derartig auszubilden, dass eine Anlenkung für einen Stabilisatorstab im Bereich dieses Federtellers angebracht werden kann.

Diese Aufgabe wird erfindungsgemäß durch die Merkmale des Anspruchs 1 gelöst. Vorteilhafte Aus- und Weiterbildungen sind in den Ansprüchen 2 bis 7 beschrieben.

Die mit der Erfindung erzielten Vorteile bestehen nicht nur darin, dass bei einer Radaufhängung mit einem einstellbaren Federteller eine Anlenkung für einen Stabilisatorstab im Bereich des Federtellers vorgesehen werden kann. Vorteilhaft kann darüber hinaus nicht nur die Feder feinfühlig den jeweils geforderten Gegebenheiten angepasst werden. Auch der Stabilisatorstab kann entsprechend feinfühlig eingestellt werden. Dadurch kann vorteilhaft eine extreme Feinjustierung zum Erzielen eines optimalen Fahrverhaltens erreicht werden.

Ein Ausführungsbeispiel der Erfindung ist in der Zeichnung dargestellt und wird im Folgenden näher beschrieben.
Fig. 1 zeigt einen Halbschnitt durch ein Federbein und
Fig. 2 zeigt eine Explosionsdarstellung eines klemmbaren Federtellers.

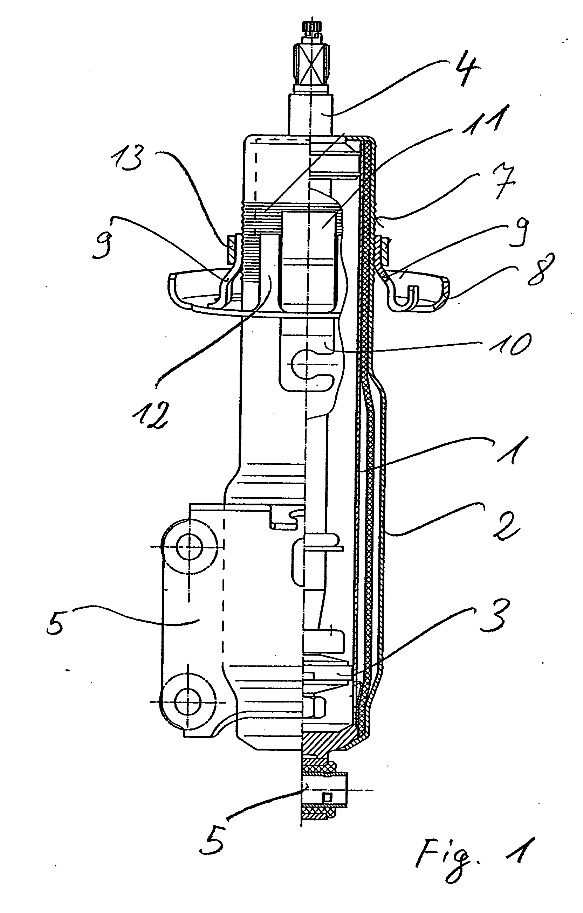

Das in Fig. 1 dargestellte Federbein weist ein Innenrohr 1 und ein Mantelrohr 2 auf. Eine mit einem Arbeitskolben 3 oszillierend in das Innenrohr 1 eintauchende Kolbenstange 4 ist mit dem Aufbau des Fahrzeuges verbunden. Das Federbein trägt Aufnahmeeinrichtungen 5, 6 zum Anbinden der Radaufhängung.

Am kolbenstangenseitigen Ende ist das Mantelrohr 2 mit umlaufenden Ringnuten 7 ausgebildet. Hier ist der Federteller 8, der an seiner Innenseite mit zungenförmigen Laschen 9 versehen ist, welche mit entsprechenden Ringvorsprüngen versehen sind, angebunden. Die Anlenkung 10 für den Stabilisatorstab erstreckt sich mit einem Anbindungsfinger 11 durch eine Ausnehmung durch eine Lasche 12 und den Federteller 8. Dieser Anbindungsfinger 11 ist, wie die Laschen 9, 12 des Federtellers, mit Ringvorsprüngen, die, wie auch die Ringvorsprünge an den Laschen 9, 12, nur segmentartig ausgebildet sein können, versehen.

Durch axiales Verschieben sowohl der Anbindung 10 als auch des Federtellers 8 können beide Bauteile unabhängig voneinander und angepasst an die Erfordernisse der Radaufhängung eingestellt werden. Nachdem diese Einstellung erfolgt ist, wird ein Sicherungsring 13 über die Laschen 9, 12 des Federtellers 8 und den Anbindungsfinger 11 der Anlenkung 10 geschoben, wodurch die Lage des Federtellers 8 und der Anlenkung 10 fixiert werden. Der Anbindungsfinger 11 der Anlenkung 10 ist länger ausgebildet als die Laschen 9, 12 des Federtellers 8. Dadurch wird sichergestellt, dass der Sicherungsring 13 den Anbindungsfinger 11 in jeder Relativlage übergreift.

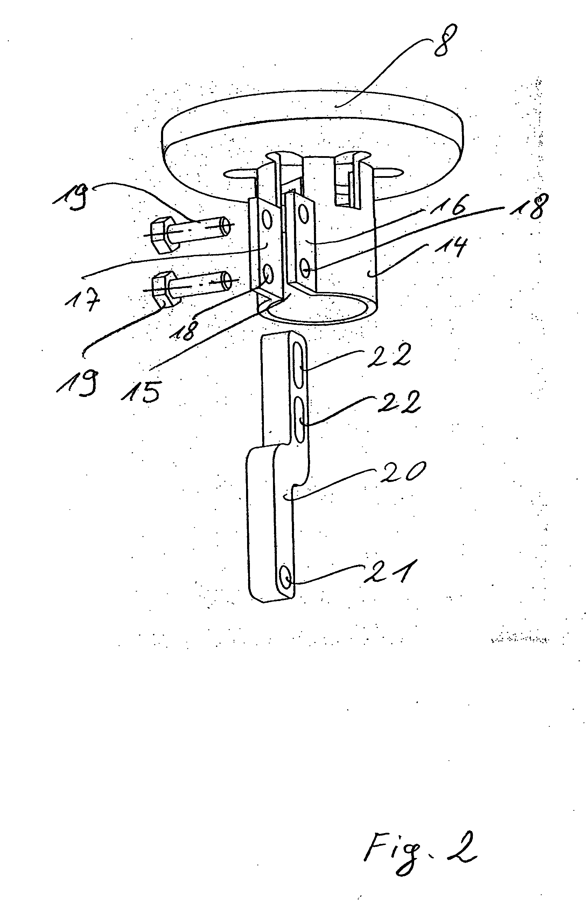

Fig. 2 zeigt eine andere Art der Anbindung eines verstellbaren Federtellers. Hier ist der Federteller 8 mit einem als Klemmflansch ausgebildeten Anbindungsflansch 14 ausgebildet. Dieser Anbindungsflansch 14 weist einen Längsschlitz 15 auf. Axialflansche 16, 17 erstrecken sich neben dem Längsschlitz 15 nach außen und sind mit Bohrungen 18 versehen. Über Schraubverbindungen, beispielsweise bestehend aus Schrauben 19 und nicht dargestellten Muttern, kann der Anbindungsflansch 14 auf dem Mantelrohr 2 eines Schwingungsdämpfers oder Federbeins geklemmt werden. Zur weiteren Sicherung sind, wie in Fig. 1 gezeigt, auch Sicherungsrillen vorsehbar.

Bei der Ausbildung des Federtellers 8 gemäß Fig. 2 ist die Anlenkung 20 für den Stabilisatorstab als abgekröpfter Flachstab ausgebildet. Am federtellerentfernten Ende der Anlenkung 20 ist ein Aufnahmeloch 21 für den Stabilisatorstab angebracht. Das federtellernahe Ende der Anlenkung 20 ist mit Langlöchern 22 ausgebildet, die von den Schrauben 19 durchdrungen werden. Diese Langlöcher 22 erlauben eine unabhängige Verstellung der Anlenkung 20 gegenüber dem Federteller 8. Nach dem Verspannen der Schraubverbindungen ist sowohl der Federteller 8 auf dem Mantelrohr 2 des Schwingungsdämpfers oder Federbeins fixiert als auch die Lage der Anlenkung 20 zum Federteller 8. Eine Überbestimmung dieser Verspannung kann durch Einsetzen von Federscheiben oder Zahnscheiben ausgeglichen werden.

### Bezugszeichenliste

1. Innenrohr
2. Mantelrohr
3. Arbeitskolben
4. Kolbenstange
5. Aufnahmeeinrichtung
6. Aufnahmeeinrichtung
7. Ringnut
8. Federteller
9. Lasche
10. Anlenkung
11. Anbindungsfinger
12. Lasche
13. Sicherungsring
14. Anbindungsflansch
15. Längsschlitz
16. Axialflansch
17. Axialflansch
18. Bohrung
19. Schraube
20. Anlenkung
21. Aufnahmeloch
22. Langloch

## Patentansprüche

1. Radaufhängung für Landfahrzeuge mit einer Feder, die sich gegen wenigstens einen Federteller (8) abstützt, einem Schwingungsdämpfer und einer Anlenkung für einen Stabilisatorstab, wobei einer der Federteller (8) in Achsrichtung der Feder einstellbar ausgebildet ist, **dadurch gekennzeichnet, dass** am Federteller (8) oder an der Einstellvorrichtung für den Federteller (8) die Anlenkung (10, 20) für den Stabilisatorstab mit einem veränderlich einstellbaren Abstand zum Federteller (8) direkt angebracht oder indirekt angebunden ist.

2. Radaufhängung nach Anspruch 1, **dadurch gekennzeichnet, dass** der Federteller (8) einstellbar am Mantelrohr (2) eines Schwingungsdämpfers oder eines Federbeins angebunden ist.

3. Radaufhängung nach Anspruch 1 oder Anspruch 2, **dadurch gekennzeichnet, dass** das Mantelrohr (2) des Schwingungsdämpfers oder Federbeins mit einem Außengewinde oder mit außen umlaufenden Ringnuten (7) ausgebildet ist und dass sowohl der Anbindungsflansch des Federtellers (8) als auch die Anlagefläche für die Anlenkung (10) des Stabilisatorstabes ein entsprechendes Innengewinde oder entsprechende nach innen ragende Ringvorsprünge aufweisen und einzeln oder gemeinsam auf dem Mantelrohr (2) fixiert sind.

4. Radaufhängung nach einem oder mehreren der Ansprüche 1 bis 3, **dadurch gekennzeichnet, dass** die Anlenkung (10, 20) für den Stabilisatorstab am Mantelrohr (2) axial oberhalb oder unterhalb des Anbindungsflansches des Federtellers (8) angeordnet ist.

5. Radaufhängung nach einem oder mehreren der Ansprüche 1 bis 3, **dadurch gekennzeichnet, dass** die Anlenkung (10) für den Stabilisatorstab radial innerhalb eines freien Segments des Anbindungsflansches des Federtellers (8) angeordnet ist.

6. Radaufhängung nach einem oder mehreren der Ansprüche 1 bis 5, **dadurch gekennzeichnet, dass** der Anbindungsflansch des Federtellers (8) und/oder die Anlagefläche der Anlenkung (10) des Stabilisatorstabes von einer Klemmhülse oder einem Klemmband als Sicherungsring (13) um- oder übergriffen wird.

7. Radaufhängung nach Anspruch 1 oder Anspruch 2, **dadurch gekennzeichnet, dass** ein Anbindungsflansch (14) des Federtellers (8) mit einem oder mehreren Längsschlitzen (15) ausgebildet ist, die in Axialflansche (16, 17) auslaufen, welche von Spannmitteln, vorzugsweise Schraubverbindungen durchdrungen sind, mittels derer der Anbindungsflansch (14) um das Mantelrohr (2) gespannt wird und dass wenigstens eines der Spannmittel die Anlenkung (20) für den Stabilisatorstab trägt.
